# EUROPEAN PATENT SPECIFICATION

(11) **EP 4 119 283 B1**
(45) Date of publication and mention of the grant of the patent: **15.01.2025**
(21) Application number: 22184663.7
(22) Date of filing: 13.07.2022
(51) Int. Cl.: B23K 26/08, B23K 26/30, B23K 26/70, B23K 37/04, F28F 9/02, F28F 9/26, F28D 1/053, B23K 101/14, B23K 103/04, B29C 65/00

(54) **APPARATUS AND METHOD FOR MANUFACTURING A HEAD OF A MODULE OF A RADIATOR**
VORRICHTUNG UND VERFAHREN ZUR HERSTELLUNG EINES KOPFES EINES MODULS EINES HEIZKÖRPERS
APPAREIL ET METHODE POUR LA FABRICATION D'UNE TÊTE D'UN MODULE D'UN RADIATEUR

(30) Priority: 13.07.2021 IT 202100018467
(43) Date of publication of application: 18.01.2023
(73) Proprietor: IRSAP SPA, 45031 Arquà Polesine (RO) (IT)
(72) Inventor: ZEN, Alessandro, 45031 Arqua'Polesine (RO) (IT); ROSSI, Fabrizio, 45031 Arqua'Polesine (RO) (IT)
(74) Representative: Studio Torta S.p.A.

(56) References cited:
- EP-B1- 0 960 680
- EP-B1- 2 246 141
- DE-B4- 102004 060 643
- JP-A- S5 736 088
- KR-B1- 102 115 181

## Description

### CROSS-REFERENCE TO RELATED APPLICATIONS

This Patent Application claims priority from Italian Patent Application No. 102021000018467 filed on July 13, 2021.

### TECHNICAL FIELD

The present invention relates to an apparatus for manufacturing a head of a module of a radiator from two half-heads, and a corresponding manufacturing method.

In particular, the present invention is advantageously but not exclusively applied to the production of tubular multi-column steel radiators, to which the following description will explicitly refer without thereby losing generality.

### BACKGROUND

As is known, a tubular multi-column steel radiator is a radiator comprising a plurality of modules, also more simply known as elements, each of which comprises a plurality of columns, i.e. a plurality of tubular elements, closed by two heads. In particular, each module is manufactured by joining by welding, for example resistance welding, the first ends of a certain number of columns to a first head and the second ends of the columns to a second head. Each head is a hollow body comprising a plurality of sleeves which are welded to the ends of relative columns and a circular through opening to allow mounting between adjacent modules.

Each head is normally manufactured by producing, first, by moulding, two half-heads, i.e. two half-shells having the shape of a head cut along a longitudinal symmetry plane, having respective edges to be joined, then smoothing and chamfering the edges and, finally, joining the two half-heads together by laser welding the smoothed and chamfered edges while the latter are in mutual contact. Therefore, each half-head has a respective circular opening which is coaxial with the circular opening of the other half-head to define the circular through opening of the head.

In particular, the joining of the two half-heads provides for clamping the two half-heads against each other with the respective edges in mutual contact and welding the two half-heads together along the two edges in mutual contact with each other by means of carbon dioxide laser welding, i.e. more simply CO₂ laser, while the two half-heads are clamped.

More in detail, an apparatus for manufacturing heads of a module of a radiator comprises a clamping system for clamping the two half-heads in contact with each other and a CO₂ laser welding system for welding the two half-heads together along the two edges in mutual contact with each other.

The clamping system comprises a pair of jaws which are connected to each other through the circular openings of the half-heads and are closed as a plier against surface portions of the half-heads. The clamping system must keep the half-heads clamped maintaining the respective edges perfectly aligned with each other during the entire welding step so that at the end of such step the head is not deformed or defective in proximity to the welding line.

The CO₂ laser welding system comprises a CO₂ laser head and handling means for moving the CO₂ laser head around the half-heads while they are clamped against each other so as to weld the two edges together in mutual contact with each other. The laser beam emitted by a CO₂ source typically has a rather open cone. To obtain greater precision during the welding, the CO₂ laser head comprises a focusing mirror and a cooling system for cooling the focusing mirror. For this reason, a CO₂ laser head has relatively large dimensions and a relatively high energy consumption.

Due to the large dimensions, the CO₂ laser head requires plenty of room for manoeuvre around the half-heads while they are clamped by the pair of jaws, in order to be able to accurately weld the entire contact line between the edges of the half heads. In order not to interfere with the movement of the CO₂ laser head, the pair of jaws clamping the half-heads must have reduced dimensions. This entails having jaws that do not press uniformly on the entire surface of the half-heads. Consequently, the heat produced by the welding in combination with a non-uniform pressure of the pair of jaws often causes deformations in the manufactured head.

European Patent No. EP0960680B1 (forming the basis for the preamble of the independent claims) discloses a method for manufacturing heads of pressed metal plate radiator elements in which each head is formed by two complementary half-shells to be joined at their respective edges. According to the method, the half-shells are first shaped so that at least one of them has a plurality of tooth-like raised portions on its joining edge, then the half-shells are arranged so that they are mated at the edges, welded with a capacitor discharge to achieve a joint only at the raised portions, and finally welded in the remaining parts of the edges by braze welding.

European Patent No. EP2246141B1 discloses a method for manufacturing a tubular radiator of the type comprising a plurality of adjacent radiating elements each comprising a tube having, at each of the ends thereof, a head consisting of two half shells. According to the method, the two half shells are coupled by laser welding with forming of burr at least on the outside at the external contact edge thereof, so as to ensure a hydraulically and mechanically sealed coupling, and each head is coupled to the tube by capacitor discharge welding by exerting a contact pressure suitable for the interpenetration between the materials of each head and of the tube with forming of inside and outside burr at the coupling edge so as to ensure a hydraulically and mechanically sealed coupling.

Japanese Patent Application No.JPS5736088A discloses a method for manufacturing a radiator panel by placing two sheets of formed metallic sheets between a male die and a female die, and subjecting the end faces to welding of deep throat depth by laser welding. The radiator panel obtained through the method prevents corrosion from end faces and has increased mechanical strength.

German Patent No. DE102004060643B4 discloses a device for welding half shells of container. The welding device has first and second controlled movable holders for each half shell, having first and second clamping jaw, respectively. The jaws compress the peripheral flanges of the half shell. The welding device has a number of clamping devices for controllable connection of both clamping jaws.

Korean Patent No. 102115181B1 discloses a laser welding apparatus for welding flat panels together by using clamping jig.

### SUMMARY

The object of the present invention is to provide an apparatus for manufacturing a head of a module of a multi-column steel radiator, which is free from the drawbacks described above and, at the same time, is easy and costeffective to manufacture.

In accordance with the present invention, an apparatus and a method for manufacturing a head of a module of a radiator are provided as defined in the appended claims.

### BRIEF DESCRIPTION OF THE DRAWINGS

In order to better understand the present invention, a preferred embodiment will now be described, by way of a mere non-limiting example and with reference to the accompanying drawings, wherein:
- Figures 1 and 2 illustrate, according to a perspective view, a head of a module of a multi-column radiator divided into two half-heads and finished with the two half-heads joined, respectively;
- Figures 3 and 4 illustrate, in a simplified manner and according to a perspective view, the apparatus for manufacturing a head of a module of a radiator of the invention in two respective operating states; and
- Figures 5 and 6 illustrate, in a simplified manner and according to a perspective view, a further embodiment of the apparatus of the invention in two respective operating states.

### DESCRIPTION OF EMBODIMENTS

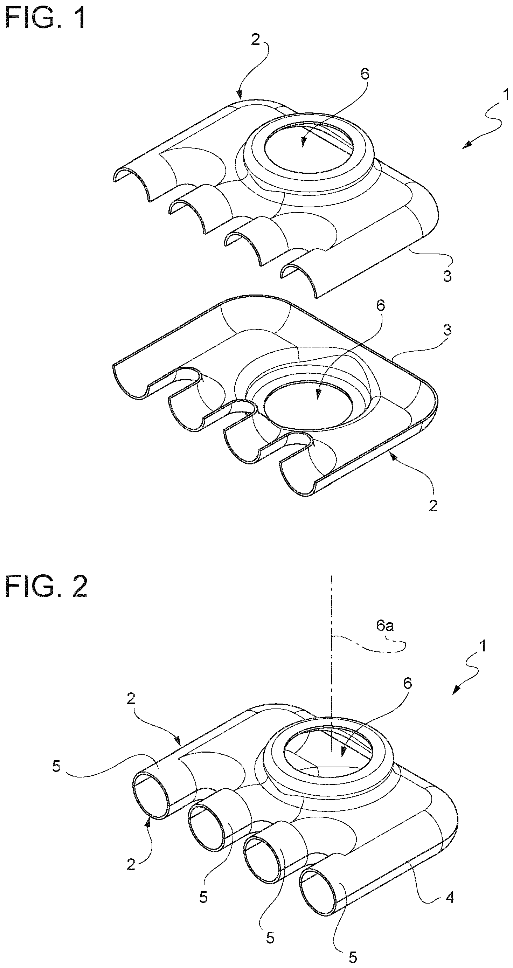

In Figures 1 and 2, reference numeral 1 generally indicates, as a whole, one of the two heads of a module of a tubular multi-column radiator, preferably made of steel.

The head 1 is illustrated in Figure 1 still divided into two half-heads 2 symmetrical with respect to the longitudinal geometric plane and having respective edges 3 defined along respective longitudinal planes, and in particular smoothed and chamfered in a known manner and with known techniques, for being joined together so as to form the head 1. In general, in fact, a method for manufacturing the head 1 provides for producing two half-heads 2, for example by moulding, smoothing and chamfering the edges 3, clamping the two half-heads 2 in contact against each other at the respective edges 3 and welding the two half-heads 2 at the edges 3 in mutual contact with each other, for example using a laser.

Figure 2 illustrates the head 1 after the joining of the half-heads 2 and the welding thereof along a contact line 4 defined by the edges 3 in mutual contact. The head 1 has a plurality of sleeves 5, which will then be joined to relative tubular elements (not illustrated) for forming a module of the multi-column radiator.

With reference to both Figures 1 and 2, each half-head 2 has a respective circular opening 6 which is coaxial to the circular opening 6 of the other half-head 2 according to an axis 6a perpendicular to a geometric plane on which the edges 3 lie in contact, and therefore the contact line 4, for allowing the assembly of several modules in a row so as to form the radiator.

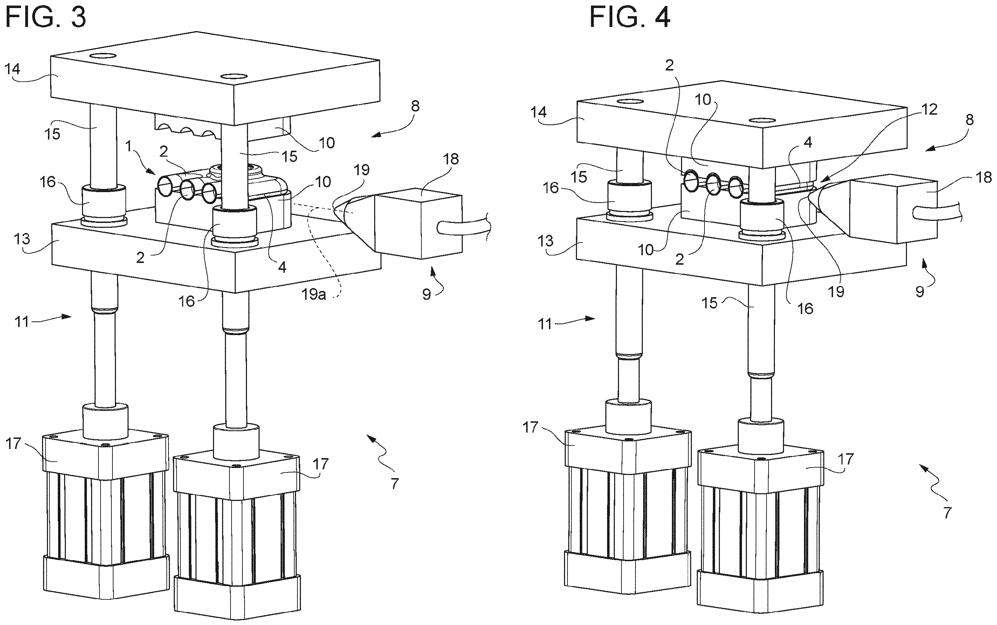

In Figures 3 and 4, reference numeral 7 generically indicates as a whole an apparatus for manufacturing the head 1 from two half-heads 2.

The apparatus 7 comprises a clamping system 8 for clamping the two half-heads 2 in contact against each other at the respective edges 3, and a laser welding system 9 for welding the two half-heads 2 together along the two edges 3 in mutual contact with each other.

The clamping system 8 comprising a pair of jaws 10 made up of a mould and counter-mould shaped like the two half-heads 2 and a handling system 11 for closing the two jaws 10 as a plier so that, in use, the latter press uniformly on the two half-heads 2. Figure 3 illustrates the handling system 11 in the open position of the jaws 10 for allowing the two half-heads 2 to be positioned on top of each other. Figure 4 illustrates the handling system 11 in the closed position of the jaws 10 for allowing the clamping of the two half-heads 2.

The depth of the shaping of the two jaws 10 is of such extent that, when the latter are closed around the half-heads 2, a peripheral slot 12 (Figure 4) remains between the jaws 10 leaving visible the mutually-contacting edges 3 which define the aforementioned contact line 4.

The handling system 11 is a motorized mould guiding system.

In particular, the handling system 11 comprises a pair of supports 13 and 14, each of which supports a respective jaw 10, and at least a pair of movable columns 15 for supporting and moving the support 14 to and from the other support 13. In the example of Figures 3 and 4, the support 13 is the lower one and is fixed with respect to a base (not illustrated) of the apparatus 7 and the support 14 is the upper one and is movable. A first jaw 10 is fixed on top of the support 13 and the other jaw 10 is fixed under the support 14 so that the jaws 10 are interposed between the supports 13 and 14 and the movement of the support 14 towards the support 13 closes the jaws 10 as a plier. The support 13 has two through holes (not visible) and is provided with two respective circular guides 16 coaxial to such through holes, each hole and the respective coaxial guide 16 being slidingly crossed by a relative column 15.

The handling system 11 comprises a pair of linear actuators 17 for translating, each one, a respective column 15 along its own axis 15a. In the illustrated example embodiment, the axis 15a is vertical. The actuators 17 work in traction to close the jaws 10 and in thrust to open the jaws 10. The actuators 17, when working in traction, exert a force for exerting the necessary pressure on the half-heads 2 during the welding so as to clamp the half-heads 2 but without deforming them due to the heat produced by the welding. The actuators 17 are, for example, of electric, hydraulic or pneumatic type.

The laser welding system 9 comprises a known type of fiber laser head 18 and a handling device (not illustrated) for moving the fiber laser head 18 around the pair of jaws 10 closed as a plier, along the slot 12, so as to direct a laser beam along the two mutually-contacting edges 3 and cover the entire contact line 4.

According to a first embodiment not illustrated, the handling device comprises a kinematic mechanism specially designed to support and guide the fiber laser head 18 along a geometric plane on which the contact line 4 lies.

According to a further embodiment not illustrated, the handling device comprises an anthropomorphic or Cartesian robotic device designed to support and move the fiber laser head 18 so as to move the laser beam along the contact line 4.

The fiber laser head 18 produces a laser beam having a greatly tapered conic shape and a very much reduced diameter at the focusing point. Such features allow the laser beam to pass through the slot 12 without touching the jaws 10 and to weld with precision along the contact line 4 also between the sleeves 5 of the head 1.

The fiber laser head 18 comprises an optical output 19 for emitting the laser beam according to an emission direction 19a. Advantageously, the optical output 19 is motorized to rotate about an axis parallel to the emission direction 19a with the aim to optimize the welding process, should the laser beam have a diameter which is too reduced.

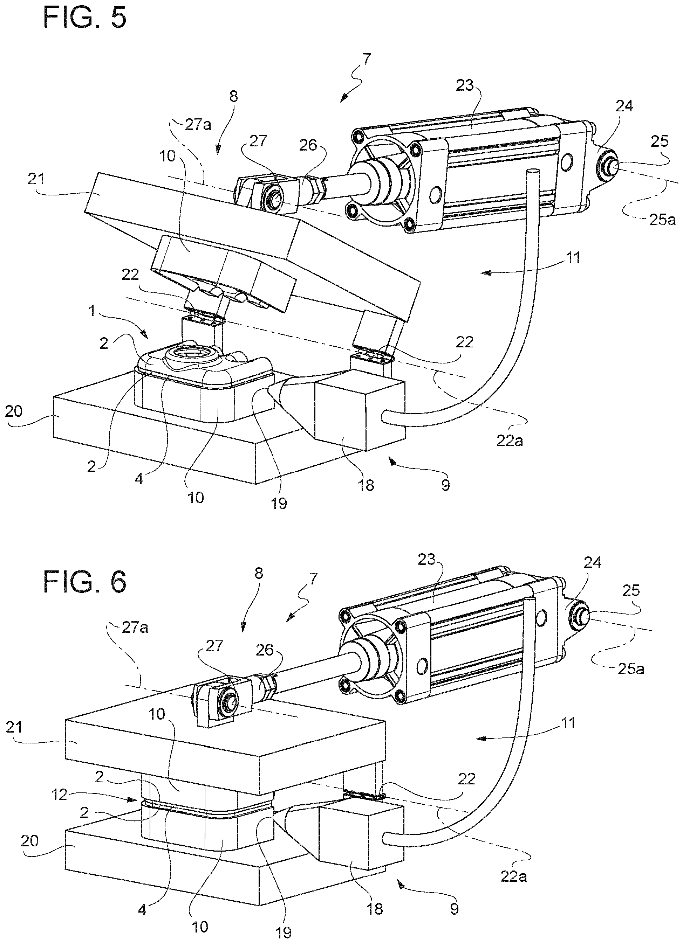

According to a further embodiment illustrated in Figures 5 and 6, wherein the corresponding elements are indicated with the same reference numerals and abbreviations of Figures 3 and 4, the handling system 11 comprises, instead of the supports 13 and 14, two analogous supports 20 and 21 for supporting the two jaws 10, and, instead of the columns 15 and the actuators 17, a pair of hinges 22 for connecting the two supports 20 and 21 along two respective edges so as to be able to rotate the support 21 to and from the other support 20, and an actuator 23 for carrying out the rotation of the support 21. In the example of Figures 5 and 6, the support 20 is the lower one and is fixed with respect to a base (not illustrated) of the apparatus 7 and the support 21 is the upper one and is in fact movable by means of the hinges 22. The rotation axis 22a of the hinges 22 is horizontal. Similar to the embodiment of Figures 3 and 4, a first jaw 10 is fixed on top of the support 20 and the other jaw 10 is fixed under the support 21 so that the jaws 10 are interposed between the supports 20 and 21 and the movement of the support 21 towards the support 20 closes the jaws 10 as a plier.

Figure 5 illustrates the handling system 11 in the open position of the jaws 10 to allow the two half-heads 2 to be positioned on top of each other. Figure 5 illustrates the handling system 11 in the closed position of the jaws 10 to allow the clamping of the two half-heads 2. The closing of the jaws 10 takes place by virtue of the rotation of the support 21 about the rotation axis 22a until it closes like a book on the support 20.

The actuator 23 is a linear actuator and has a first end 24 connected by means of a hinge 25 to a fixed part (not illustrated) of the apparatus 7 and a second translating end 26 fixed to the support 21 by means of another hinge 27. The rotation axes 25a and 27a of the hinges 25 and 27 are parallel to the rotation axis 22a. The actuator 23 is, for example, of electric, hydraulic or pneumatic type.

The actuator 23 works in thrust for closing the jaws 10 and in traction for opening the jaws 10. When working in thrust, the actuator exerts a force for exerting the necessary pressure on the half-heads 2 during the welding so as to clamp the half-heads 2 but without deforming them due to the heat produced by the welding.

The main advantage of the apparatus 7 described above is to clamp the two half-heads 2 by exerting a pressure on them, parallel to the axis 6a of the respective circular openings 6, which is uniformly distributed on the face, seen perpendicular to the axis 6a, of each half-head 2, by virtue of the particular shape of the jaws 10, which are made up of a mould and counter-mould shaped like the two half-heads 2. The particular shape of the jaws 10 reduces the surface of the half-heads 2 which remains free when they are clamped by the clamping system 8. In other words, the slot 12 which leaves visible the contact line 4 between the half-heads 2 is very narrow. However, the use of a fiber laser head 18 which, compared to a CO₂ laser head, emits a laser beam with reduced conic shape and diameter and has a reduced bulk thanks to the absence of focusing mirrors, allows directing the laser beam through the slot 12 and welding with precision along the contact line 4, even in hard-to-reach points, such as in the sections of the contact line between the sleeves 5 of the head 1.

## Claims

1. Apparatus for manufacturing a head of a module of a radiator, preferably made of steel, from two half-heads (2) having respective edges (3) to be joined, previously smoothened and chamfered, the apparatus (7) comprising a clamping system (8) for clamping the two half-heads (2) in contact with each other at the respective edges (3), and a welding system (9) for welding the two half-heads (2) together along the two edges (3) in mutual contact with each other; the clamping system (8) comprising a pair of jaws (10) made up of a mould and counter-mould shaped like the two half-heads (2) and closable as a plier in such a way that, in use, they press uniformly on the half-heads (2) and define a slot (12) that leaves the edges (3) visible; the apparatus being **characterized in that** the welding system (9) is a laser welding system comprising a fiber laser head (18) and handling means for moving the fiber laser head (18) around the pair of jaws (10) closed as a plier, along said slot (12) so as to direct a laser beam along the two mutually-contacting edges (3).

2. Apparatus according to claim 1, wherein said handling means comprises a kinematic mechanism for guiding the fiber laser head (18) along a geometric plane on which a contact line (4) between the edges (3) lies.

3. Apparatus according to claim 1, wherein said handling means comprise an anthropomorphic or cartesian robotic device arm suitable for supporting and moving the fiber laser head (18).

4. Apparatus according to any one of claims 1 to 3, wherein said fiber laser head (18) comprises an optical output (19) for emitting the laser beam according to an emission direction (19a), said optical output (19) being motorized to rotate about an axis parallel to the emission direction (19a) .

5. Apparatus according to any one of claims 1 to 4, wherein said clamping system (8) comprises a plurality of columns (15) for supporting and moving a first of the jaws (10) against the second of the jaws (10) and thereby achieving a plier closure of the pair of jaws (10).

6. Apparatus according to any one of claims 1 to 4, wherein said clamping system (8) comprises a first support (20) for a first of the jaws (10), a second support (21) for the second of the jaws (10) and at least one hinge (22) for connecting first and second supports (20, 21) so as to be able to rotate the second support (21) towards the first support (20) and thereby achieving a plier closure of the pair of jaws (10).

7. Method for manufacturing a head of a module of a radiator, preferably made of steel, comprising:
- producing two half-heads (2) having respective edges (3) to be joined to make the head (1);
- performing smoothing and chamfering of the edges (3);
- clamping the two half-heads (2) against each other at their respective edges (3) by means of a pair of jaws (10) closed as a plier in such a way as to exert uniform pressure on each half-head (2) in a direction (6a) perpendicular to a geometric plane on which the respective edge (3) lies, the pair of jaws (10) being made up of a mould and counter-mould shaped like the two half-heads (2); and being **characterised in that** it comprises:
- laser-welding the two half-heads (2) at the edges (3) in contact with each other by means of a fiber laser head (18) moved around the pair of jaws (10) while the latter are closed as a plier.

## Patentansprüche

1. Vorrichtung zur Herstellung eines Kopfes eines Moduls eines Heizkörpers, der vorzugsweise aus Stahl hergestellt ist, aus zwei Halbköpfen (2) mit jeweiligen Rändern (3), die verbunden werden sollen, die vorher geglättet und angeschrägt wurden, wobei die Vorrichtung (7) ein Spannsystem (8) zum Einspannen der zwei Halbköpfe (2), wobei sie an den jeweiligen Rändern (3) miteinander in Berührung sind, und ein Schweißsystem (9) zum Zusammenschweißen der zwei Halbköpfe (2) entlang der zwei Ränder (3) in wechselseitiger Berührung miteinander aufweist; wobei das Einspannsystem (8) ein Paar von Klauen (10) aufweist, die aus einer Form und einer Gegenform hergestellt sind, die wie die beiden Halbköpfe (2) geformt sind und als eine Zange in einer derartigen Weise schließbar sind, dass sie im Gebrauch gleichmäßig auf die Halbköpfe (2) drücken und einen Schlitz (12) definieren, der die Ränder (3) sichtbar lässt; wobei die Vorrichtung **dadurch gekennzeichnet ist, dass** das Schweißsystem (9) ein Laserschweißsystem ist, das einen Faserlaserkopf (18) und eine Handhabungseinrichtung zum Bewegen des Faserlaserkopfes (18) um das Paar von Klauen (10), die als eine Zange geschlossen sind, herum entlang des Schlitzes (12) aufweist, um einen Laserstrahl entlang der zwei sich wechselseitig berührenden Ränder (3) zu lenken.

2. Vorrichtung nach Anspruch 1, wobei die Handhabungseinrichtung einen kinematischen Mechanismus zum Führen des Faserlaserkopfes (18) entlang einer geometrischen Ebene, auf der eine Berührungslinie (4) zwischen den Rändern (3) liegt, aufweist.

3. Vorrichtung nach Anspruch 1, wobei die Handhabungseinrichtung einen menschenartigen oder kartesischen Robotervorrichtungsarm aufweist, der geeignet ist, um den Faserlaserkopf (18) zu halten und zu bewegen.

4. Vorrichtung nach einem der Ansprüche 1 bis 3, wobei der Faserlaserkopf (18) einen optischen Ausgang (19) zum Emittieren des Laserstrahls gemäß einer Emissionsrichtung (19a) aufweist, wobei der optische Ausgang (19) motorisiert ist, so dass er sich um eine zu der Emissionsrichtung (19a) parallele Achse dreht.

5. Vorrichtung nach einem der Ansprüche 1 bis 4, wobei das Einspannsystem (8) mehrere Säulen (15) zum Halten und Bewegen einer ersten der Klauen (10) gegen die zweite der Klauen (10) und dadurch Erreichen eines Schließens der Zange des Paars von Klauen (10) aufweist.

6. Vorrichtung nach einem der Ansprüche 1 bis 4, wobei das Einspannsystem (8) einen ersten Träger (20) für eine erste der Klauen (10), einen zweiten Träger (21) für die zweite der Klauen (10) und wenigstens ein Gelenk (22) zum Verbinden der ersten und zweiten Träger (20, 21) aufweist, so dass es in der Lage ist, den zweiten Träger (21) in Richtung des ersten Trägers (20) zu drehen und dadurch ein Schließen der Zange des Paars von Klauen (10) zu erreichen.

7. Verfahren zur Herstellung eines Kopfes eines Moduls eines Heizkörpers, der vorzugsweise aus Stahl hergestellt ist, das aufweist:
- Herstellen von zwei Halbköpfen (2) mit jeweiligen Rändern (3), die verbunden werden sollen, um den Kopf (1) herzustellen;
- Durchführen von Glätten und Anschrägen der Ränder (3);
- Gegeneinander-Einspannen der zwei Halbköpfe (2) an ihren jeweiligen Rändern (3) mit Hilfe eines Paars von Klauen (10), die als eine Zange in einer derartigen Weise geschlossen werden, dass sie auf jeden Halbkopf (2) einen gleichmäßigen Druck in einer Richtung (6a) ausüben, die senkrecht zu einer geometrischen Ebene ist, auf welcher der jeweilige Rand (3) liegt, wobei das Paar von Klauen (10) aus einer Form und einer Gegenform hergestellt ist, die wie die beiden Halbköpfe (2) geformt sind; und **dadurch gekennzeichnet, dass** es aufweist:
- Laserschweißen der zwei Halbköpfe (2) an den Rändern (3), die miteinander in Berührung sind, mit Hilfe eines Faserlaserkopfes (18), der um das Paar von Klauen (10) herumbewegt wird, während die letzteren als eine Zange geschlossen sind.

## Revendications

1. Appareil pour la fabrication d'une tête d'un module d'un radiateur, de préférence composée d'acier, à partir de deux demi-têtes (2) ayant des bords (3) respectifs devant être assemblés, précédemment polis et chanfreinés, l'appareil (7) comprenant un système de serrage (8) pour le serrage des deux demi-têtes (2) en contact l'une avec l'autre au niveau des bords (3) respectifs, et un système de soudage (9) pour le soudage des deux demi-têtes (2) ensemble le long des deux bords (3) en contact mutuel l'une avec l'autre ; le système de serrage (8) comprenant une paire de mâchoires (10) composées d'un moule et d'un contre-moule formés comme les deux demi-têtes (2) et pouvant être fermées comme une pince de sorte que, lors de l'utilisation, elles pressent uniformément sur les deux demi-têtes (2) et définissent une fente (12) qui laisse les bords (3) visibles ; l'appareil étant **caractérisé en ce que** le système de soudage (9) est un système de soudage au laser comprenant une tête de laser à fibres (18) et des moyens de manipulation pour le déplacement de la tête de laser à fibres (18) autour de la paire de mâchoires (10) fermées comme une pince, le long de ladite fente (12) de manière à diriger un faisceau laser le long des deux bords (3) mutuellement en contact.

2. Appareil selon la revendication 1, dans lequel lesdits moyens de manipulation comprennent un mécanisme cinématique pour le guidage de la tête de laser à fibres (18) le long d'un plan géométrique sur lequel une ligne de contact (4) entre les bords (3) repose.

3. Appareil selon la revendication 1, dans lequel lesdits moyens de manipulation comprennent un bras de dispositif robotique anthropomorphique ou cartésien approprié pour le support et le déplacement de la tête de laser à fibres (18).

4. Appareil selon l'une quelconque des revendications 1 à 3, dans lequel ladite tête de laser à fibres (18) comprend une sortie optique (19) pour l'émission du faisceau laser selon une direction d'émission (19a), ladite sortie optique (19) étant motorisée pour tourner autour d'un axe parallèle à la direction d'émission (19a).

5. Appareil selon l'une quelconque des revendications 1 à 4, dans lequel ledit système de serrage (8) comprend une pluralité de colonnes (15) pour le support et le déplacement d'une première des mâchoires (10) contre la seconde des mâchoires (10) et par conséquent l'obtention d'une fermeture de pince de la paire de mâchoires (10).

6. Appareil selon l'une quelconque des revendications 1 à 4, dans lequel ledit système de serrage (8) comprend un premier support (20) pour une première des mâchoires (10), un second support (21) pour la seconde des mâchoires (10) et au moins une charnière (22) pour le raccordement des premier et second supports (20, 21) de manière à pouvoir tourner le second support (21) en direction du premier support (20) et par conséquent l'obtention d'une fermeture de pince de la paire de mâchoires (10).

7. Méthode de fabrication d'une tête d'un module d'un radiateur, de préférence composée d'acier, comprenant :
- la production de deux demi-têtes (2) ayant des bords (3) respectifs devant être assemblés pour fabriquer la tête (1) ;
- la réalisation d'un polissage et d'un chanfreinage des bords (3) ;
- le serrage des deux demi-têtes (2) l'une contre l'autre au niveau de leurs bords (3) respectifs au moyen d'une paire de mâchoires (10) fermées comme une pince de manière à exercer une pression uniforme sur chaque demitête (2) dans une direction (6a) perpendiculaire à un plan géométrique sur lequel le bord (3) respectif repose, la paire de mâchoires (10) étant composée d'un moule et d'un contre-moule formés comme les deux demi-têtes (2) ; et étant **caractérisée en ce qu'**elle comprend :
- le soudage au laser des deux demi-têtes (2) au niveau des bords (3) en contact l'une avec l'autre au moyen d'une tête de laser à fibres (18) déplacée autour de la paire de mâchoires (10) alors que ces dernières sont fermées comme une pince.
